# FASCICULE DE BREVET EUROPEEN

(11) **EP 0 944 845 B1**
(45) Date de publication et mention de la délivrance du brevet: **25.08.2004**
(21) Numéro de dépôt: 98949067.7
(22) Date de dépôt: 14.10.1998
(51) Int. Cl.: G01T 1/29, G01T 7/00

(54) **DISPOSITIF DE LOCALISATION DE SOURCES DE RAYONNEMENT**
VORRICHTUNG ZUR LOKALISIERUNG VON STRAHLUNGSQUELLEN
DEVICE FOR LOCATING RADIATION SOURCES

(30) Priorité: 15.10.1997 FR 9712892
(43) Date de publication de la demande: 29.09.1999
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: GAUCHER, Jean-Claude DI, décédé (FR); LAINE, Frédéric, F-78310 Maurepas (FR); GAL, Olivier, F-75015 Paris (FR)
(74) Mandataire: Poulin, Gérard
(86) Numéro de dépôt international: PCT/FR1998/002211
(87) Numéro de publication internationale: WO 1999/019747

(56) Documents cités:
- FR-A- 2 575 821
- FR-A- 2 652 909
- FR-A- 2 717 587
- US-A- 4 788 699

## Description

### DOMAINE TECHNIQUE

La présente invention concerne un dispositif de localisation de sources de rayonnement.

Elle s'applique notamment à la localisation de sources de rayonnement susceptibles d'être contenues dans un local tel qu'une cellule à haute activité par exemple, ou présentes accidentellement dans un local.

### ÉTAT DE LA TECHNIQUE ANTÉRIEURE

On connaît déjà un dispositif de localisation de sources de rayonnement par le document suivant, auquel on se reportera :
(1) demande de brevet français n°8500088 du 4 janvier 1985 (voir également EP-A-0 188 973 et US-A-4,797,701).

Le dispositif décrit dans la demande mentionnée ci-dessus utilise, pour la localisation de sources de rayonnement, une chambre à sténopé dans laquelle sont placés un film sensible au rayonnement et un film sensible à la lumière visible de la zone dans laquelle sont susceptibles de se trouver les sources de rayonnement ainsi qu'un obturateur dont l'ouverture permet la prise de vue en lumière visible et qui est transparent au rayonnement des sources.

Après développement de ces films et superposition de ces derniers, on peut localiser les sources de rayonnement dans leur environnement (mais pas en temps réel).

Un perfectionnement du dispositif décrit dans le document (1) est connu par le document suivant, auquel on se reportera :
(2) demande de brevet français n°8913281 du 11 octobre 1989 (voir aussi EP-A-0425333 et US-A-5,204,533).

Un mode de réalisation particulier du dispositif décrit dans ce document (2) est schématiquement représenté sur la figure 1.

Ce dispositif est destiné à la localisation, en temps réel, de sources de rayonnement 2, notamment de sources de rayonnement gamma (ou X ou β par exemple).

Il comprend une chambre 4 à sténopé, formée dans un corps 6 qui constitue un blindage de la chambre 4 vis-à-vis du rayonnement gamma.

Le blindage absorbe ainsi le rayonnement des sources 2 et le rayonnement parasite d'autres sources susceptibles de se trouver hors champ.

Le corps 6 peut être fait d'un matériau approprié, tel que l'alliage à base de tungstène connu sous le nom « Denal ».

Des moyens 8 symbolisent un support orientable du corps 6 et donc du dispositif.

Le corps 6 comporte un collimateur 10 en regard de la chambre 4.

La paroi du collimateur 10 est constituée de deux cônes coaxiaux de même angle d'ouverture, opposés par leur sommet commun qui est percé pour former le sténopé 12.

Ce collimateur 10 peut comporter, au niveau et autour du sténopé 12, une partie 14 opaque à la lumière (visible) qui provient de la zone examinée mais perméable au rayonnement gamma, pour tenir compte d'une éventuelle insuffisance d'activité des sources 2 de rayonnement gamma que l'on veut localiser (sténopé à double diaphragme).

De plus, le collimateur 10 peut être interchangeable, ce qui permet de choisir un collimateur à simple ou double diaphragme, d'ouverture adaptée à l'activité supposée des sources gamma 2 que l'on veut localiser.

En outre, le changement de collimateur 10 permet d'augmenter ou de diminuer, selon la conicité et le tirage choisis pour ce collimateur, le champ-objet couvert par le dispositif.

Le dispositif comprend en outre un obturateur mécanique 16 prévu pour empêcher la lumière visible de la zone où se trouvent les sources 2 de pénétrer dans la chambre 4, tout en laissant passer le rayonnement gamma.

Cet obturateur 16 est un iris de type appareil photo, ou, par exemple, une plaque métallique escamotable qui est perpendiculaire à l'axe 18 de la chambre 4 (axe des deux cônes formant l'axe optique du dispositif) et située à proximité du sténopé 12, du côté de la chambre 4.

Les mouvements de la plaque formant l'obturateur 16 sont télécommandés par des moyens électromécaniques 20 qui sont eux-mêmes commandés par un boîtier de télécommande 22.

Ce dernier peut être placé à grande distance du dispositif si nécessaire,

Le dispositif comprend aussi, dans la chambre 4, en regard du sténopé 12, un écran luminescent 24 qui repose contre un épaulement circulaire interne du corps 6, au niveau de la base de la paroi conique du collimateur 10.

Derrière l'écran 24 se trouve une caméra 26 reliée à des moyens 28 d'acquisition en temps réel, de traitement et de visualisation des signaux électriques fournis par la caméra, et à des moyens de mémorisation 30.

Lorsque l'obturateur 16 est fermé, on obtient au bout d'un certain temps (quelques secondes, par exemple 10 s) l'image des sources de rayonnement gamma.

Cette image est stockée dans une première zone de mémoire des moyens 28.

Ensuite, en commandant l'ouverture de l'obturateur 16, on obtient, de façon quasi-instantanée, une image (en lumière visible) de la zone observée, dans laquelle sont les sources 2.

Cette seconde image est également stockée dans une seconde zone de mémoire des moyens 28, distincte de la première zone de mémoire.

Après traitement des images et notamment coloration des « taches » dues à l'activité des sources 2 afin de bien repérer ces sources et distinguer leur « luminosité gamma » de la luminosité (en lumière visible) d'objets qui sont présents dans la zone observée mais n'émettent aucun rayonnement gamma, les première et seconde images sont affichées superposées sur l'écran des moyens 28, ce qui permet le repérage des sources de rayonnement gamma.

Rappelons aussi que l'écran luminescent 24 est transparent dans le domaine visible et apte à convertir le rayonnement gamma des sources 2, qui lui parvient à travers le sténopé 12, en un rayonnement visible par la caméra 26 qui est prévue pour fournir, sous forme de signaux électriques, une image de la scène que cette caméra observe à travers le sténopé 12 (lorsque l'obturateur 16 est ouvert).

La fenêtre d'entrée de la caméra 26 est plaquée contre l'écran 24, ce dernier étant ainsi placé entre le sténopé 12 et la caméra 26.

Le choix du matériau de l'écran dépend de l'activité des sources à localiser.

Si l'activité est très faible, on peut utiliser un écran en NaI ; si elle n'est pas trop forte, on peut utiliser un écran en germanate de bismuth (BGO) et si elle est forte, on peut utiliser un écran en matière plastique scintillante, suffisant pour la détection de rayonnements X ou β par exemple.

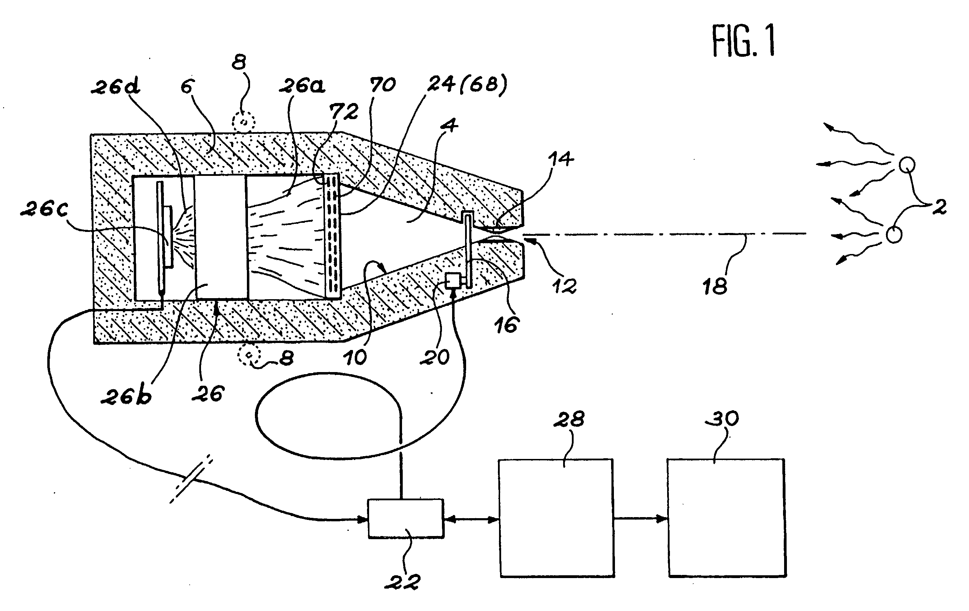

A titre purement indicatif et nullement limitatif, on utilise une caméra 26 du genre de celle qui est commercialisée par la société LHESA, dont la sensibilité est de 10⁻⁷ lux et qui comprend un réducteur d'image à fibres optiques 26a dont la face plane d'entrée est plaquée contre l'écran 24, ce réducteur étant suivi par un intensificateur d'image 26b qui est lui-même suivi par une matrice à transfert de charges (CCD) qui porte la référence 26c sur la figure 1.

Un couplage par réducteur d'images à fibres optiques 26d relie la matrice 26c à l'intensificateur 26b.

Un perfectionnement du dispositif décrit dans le document (2) est également connu par le document suivant auquel on se reportera :
(3) demande de brevet français n°9403279 du 21 mars 1994 (voir aussi EP-A-0674188 et US-A-5,557,107).

Ce dispositif connu par le document (3) comprend, devant une chambre à sténopé, un collimateur composé de deux demi-collimateurs mobiles en rotation autour d'un axe commun de rotation.

Ce collimateur particulier permet d'assurer les trois fonctions suivantes :
- une interchangeabilité facile du collimateur,
- la possibilité de passer du domaine d'observation visible au domaine d'observation gamma (obturation), et
- la variation de la longueur focale du collimateur.

Dans le dispositif représenté sur la figure 1, la qualité d'une image en lumière visible dépend essentiellement de la taille du diaphragme utilisé pour la formation de cette image.

Or cette taille ne doit être ni trop grande, pour éviter le flou géométrique, ni trop petite pour éviter le flou dû à la diffraction.

Comme on l'a vu, on cherche à optimiser la qualité de l'image en lumière visible en utilisant un sténopé constituant un double diaphragme, à savoir un diaphragme de petite taille, adapté à la formation de cette image visible, et un diaphragme plus grand, adapté à la formation d'une image des sources de rayonnement (par exemple gamma).

Cependant, même après optimisation de l'ouverture du diaphragme, la qualité des images en lumière visible, obtenues avec un dispositif du genre de celui de la figure 1, laisse encore à désirer.

Il en est d'ailleurs de même pour le dispositif décrit dans le document (1).

### EXPOSÉ DE L'INVENTION

La présente invention a pour but de remédier à l'inconvénient précédent en proposant un dispositif de localisation de sources de rayonnement permettant de repérer ces sources sur une image de leur environnement en lumière visible, de meilleure qualité que celles qui sont obtenues avec un dispositif du genre de celui de la figure 1 ou de celui qui est décrit dans le document (1).

De façon précise, la présente invention a pour objet un dispositif de localisation de sources de rayonnement, susceptibles de se trouver dans une zone, ce dispositif comprenant une chambre à sténopé, dont la paroi forme un blindage qui absorbe ledit rayonnement, et des moyens d'obturation de la chambre à sténopé, ces moyens d'obturation étant transparents au rayonnement des sources, ce dispositif comprenant en outre dans la chambre à sténopé, en regard de ce sténopé, des moyens de formation d'images, permettant d'obtenir d'une part une image des sources grâce au rayonnement de celles-ci et d'autre part une image de la zone grâce à la lumière visible de cette zone lorsque les moyens d'obturation sont ouverts, ce dispositif étant caractérisé en ce qu'une partie du blindage, où se trouve le sténopé, est mobile et rendue rigidement solidaire d'une optique permettant d'obtenir des images nettes en lumière visible sur la profondeur de champ souhaitée, cette optique étant apte à se substituer au sténopé, pour la formation de l'image de la zone, et réciproquement pour la formation de l'image des sources.

Il convient que le grandissement de l'optique soit strictement identique à celui du sténopé formant l'image des sources.

Selon un mode de réalisation préféré du dispositif objet de l'invention, la partie mobile du blindage et l'optique sont mobiles en rotation autour d'un axe parallèle à l'axe de la chambre.

De préférence, la partie mobile du blindage a une forme apte à reconstituer exactement la paroi de la chambre à sténopé lorsque ce sténopé est dans la position permettant la formation de l'image des sources.

Le dispositif peut comprendre en outre un ensemble moto-réducteur fixé à la paroi de la chambre, à l'extérieur de celle-ci, et prévu pour faire tourner l'ensemble formé par la partie mobile du blindage et l'optique autour de l'axe parallèle à l'axe de la chambre.

De préférence, l'optique comprend :
- deux lentilles, déterminées de manière à assurer la mise au point sur les moyens de formation d'images, et
- un diaphragme qui est disposé entre les deux lentilles et dont l'ouverture est déterminée de manière à obtenir la profondeur de champ souhaitée.

Il convient que le diamètre de cette ouverture ou pupille, qui détermine l'ouverture de l'optique, soit optimisé pour assurer d'une part une ouverture maximale de cette optique et d'autre part une mise au point parfaite de l'image dans la gamme des profondeurs de champ requises (par exemple de 1 m à 10 m).

Les moyens d'obturation peuvent comprendre un obturateur mobile transparent au rayonnement des sources et placé entre les moyens de formation d'images et la partie mobile du blindage.

Cependant, dans un mode de réalisation préféré, plus simple à fabriquer, ces moyens d'obturation comprennent un élément qui est opaque à la lumière visible et transparent au rayonnement des sources et qui obture en permanence le sténopé.

Les moyens d'obturation de la chambre à sténopé qui sont transparents au rayonnement des sources sont de préférence constitués par un matériau choisi de telle sorte qu'il atténue au minimum le rayonnement des sources.

Pour le rayonnement gamma, on utilise par exemple de l'aluminium ou du bérylium de faible épaisseur.

Selon un premier mode de réalisation particulier du dispositif objet de l'invention, les moyens de formation d'images comprennent un écran luminescent, transparent dans le domaine visible et apte à convertir le rayonnement des sources en un rayonnement lumineux visible, les moyens d'obturation étant en outre aptes à empêcher la lumière visible de la zone d'atteindre l'écran, le dispositif comprenant aussi une caméra qui est optiquement couplée à l'écran et qui est apte à fournir sous forme de signaux électriques, une image des sources, grâce au rayonnement lumineux qu'elle reçoit de l'écran, et une image de la zone, grâce à la lumière visible qu'elle reçoit de cette zone à travers l'écran lorsque les moyens d'obturation sont ouverts.

Selon un deuxième mode de réalisation particulier, les moyens de formation d'images comprennent un dispositif à deux films, l'un de ces deux films étant sensible au rayonnement des sources et l'autre à la lumière visible de la zone.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe transversale schématique d'un dispositif connu de localisation de sources de rayonnement et a déjà été décrite,
- la figure 2 est une vue en coupe transversale schématique et partielle d'un mode de réalisation particulier du dispositif objet de l'invention, comprenant un barillet qui se trouve dans la position permettant d'obtenir l'image des sources,
- la figure 3 est une vue en coupe transversale schématique de l'optique faisant partie du dispositif de la figure 2, et
- la figure 4 est une vue en coupe transversale schématique et partielle du dispositif de la figure 2 dont le barillet se trouve dans une position permettant d'obtenir l'image (en lumière visible) de la zone dans laquelle se trouvent les sources.

### EXPOSÉ DÉTAILLÉ DE MODES DE RÉALISATION PARTICULIERS

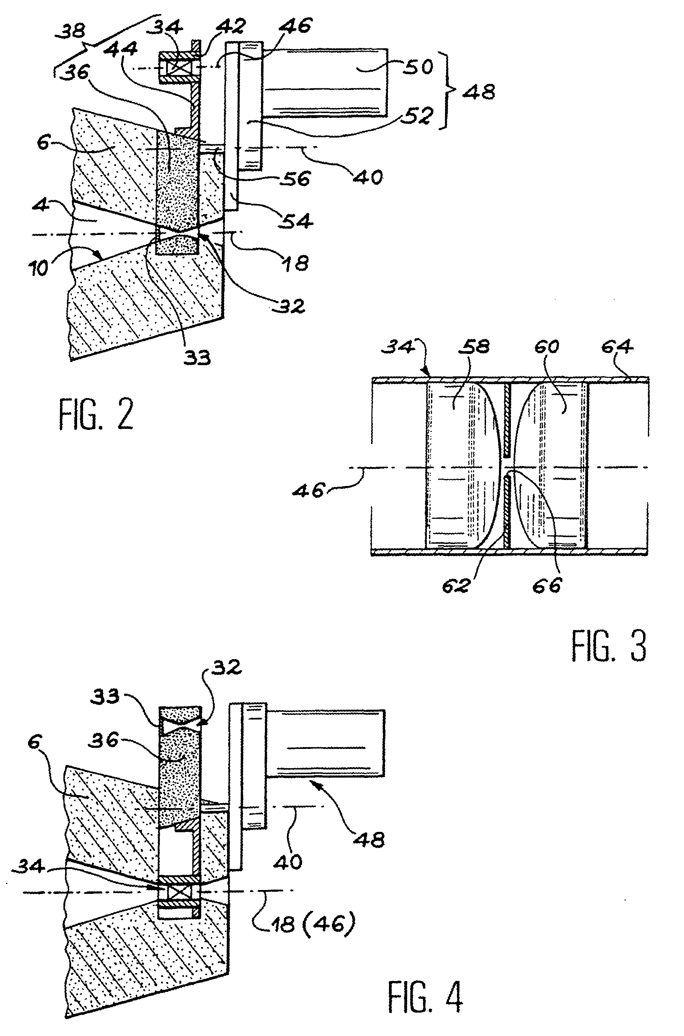

Le dispositif conforme à l'invention de la figure 2 est identique au dispositif de la figure 1 sauf dans la partie-avant du dispositif, là où se trouve le sténopé dans le cas de la figure 1.

Seule la partie-avant correspondante est représentée sur la figure 2.

Dans le cas de la figure 2, le sténopé référencé ici 32 est réservé à la prise d'images des sources de rayonnement que l'on veut localiser.

De préférence, ce sténopé 32 est obturé en permanence par une fine pastille 33 en matériau léger, opaque à la lumière visible et transparent au rayonnement gamma.

L'obturation du sténopé 32 (vis-à-vis de la lumière visible) peut aussi être obtenue grâce à un obturateur mobile du genre de l'obturateur 16 de la figure 1.

Cet obturateur est alors placé entre l'écran luminescent (non représenté sur la figure 2) et la partie-avant du dispositif, partie-avant qui est représentée sur la figure 2.

De plus, le dispositif de la figure 2 comprend une optique 34 adaptée à la prise d'image de la zone (en lumière visible) où se trouvent ces sources.

Le sténopé 32 se trouve dans une partie 36 du blindage constituant la paroi de la chambre à sténopé 4 et cette partie 36 est mobile pour qu'on puisse lui substituer l'optique 34 lorsqu'on veut faire une image de la zone en lumière visible.

On voit sur la figure 2 que la pièce mécanique constituée par la partie mobile 36 permet de reconstituer un sténopé parfait pour la prise d'images en rayonnement gamma.

Une telle pièce mobile doit être usinée avec une précision aussi grande que possible, ce qui est permis grâce aux progrès de l'usinage commandé par ordinateur.

Le fait d'utiliser une partie mobile du blindage, cette partie ayant une forme adaptée pour compléter exactement le corps 6 du dispositif, permet avantageusement d'obtenir le blindage le plus homogène possible autour de la caméra pour que le bruit de fond dû au rayonnement parasite traversant le blindage soit le plus uniforme possible.

On voit sur la figure 2 que l'ensemble formé par cette partie mobile de blindage 36 et l'optique 32 constitue une sorte de barillet 38.

Ce barillet 38 est mobile en rotation autour d'un axe 40 de part et d'autre duquel se trouvent le sténopé 32 et l'optique 34 et qui est parallèle à l'axe optique 18 de la chambre 4.

L'optique 34 est montée dans un support 42 qui est rendu rigidement solidaire de la partie de blindage 36 par l'intermédiaire d'un bras 44.

Dans le cas de la figure 2, le barillet 38 se trouve dans la position permettant la prise d'images des sources en rayonnement gamma et le sténopé 32 se trouve sur l'axe 18 de la chambre 4.

Ce sténopé est obturé en permanence par la pastille 33, ou par l'obturateur mobile mentionné plus haut dans la position fermée (lorsqu'un tel obturateur est prévu).

Au contraire, dans le cas de la figure 4, le barillet 38 se trouve dans la position permettant la prise d'images de la zone en lumière visible, l'axe 46 de l'optique coïncide avec l'axe 18 de la chambre 4.

L'obturateur mobile (dans la variante mentionnée plus haut) est alors dans la position ouverte (éventuellement pendant le seul temps de pose choisi par les utilisateurs).

Le dispositif de la figure 2 est muni d'un ensemble 48 comprenant un moteur 50 et un réducteur 52 et fixé par l'intermédiaire d'une plaque-support 54 à l'avant du corps 6 du dispositif.

Cet ensemble moto-réducteur 48 est capable d'entraîner en rotation le barillet 38 par l'intermédiaire d'un axe mécanique 56 centré sur l'axe (géométrique) 40.

De préférence, on réalise autant de pièces du mécanisme d'entraînement du barillet 38 que possible en un métal léger comme par exemple l'aluminium.

Un mode de réalisation préféré de l'optique 34 est schématiquement représenté sur la figure 3.

L'optique 34 de la figure 3 comprend deux lentilles 58 et 60 dont l'axe optique commun constitue l'axe 46 de l'optique 34.

Ces deux lentilles forment un doublet et sont séparées par un diaphragme 62 de pupille 66.

Dans l'exemple représenté ces lentilles sont plan-convexes et leurs faces convexes sont tournées l'une vers l'autre.

Ces deux lentilles et le diaphragme associé sont montés dans un support 64 qui est inséré dans le support 42 de la figure 2.

On précise que l'optique 34 est positionnée de telle sorte que son foyer-image soit sur la face d'entrée de la caméra 26, cette face d'entrée étant le plan commun à l'écran 24 et au réducteur 26a.

Par construction, le grandissement est ainsi le même pour l'image en lumière visible et l'image gamma et les deux images sont superposables.

Les deux lentilles sont conçues de manière à permettre une mise au point sur la caméra 26 ou, plus précisément, sur la face d'entrée (définie plus haut) de cette caméra, pour obtenir des images nettes en lumière visible.

De plus, le diamètre de la pupille 66 que comprend le diaphragme 62 est optimisé par un compromis entre un diamètre de grande valeur, pour capter un maximum de lumière et réduire les effets de la diffraction, et un diamètre de petite valeur pour assurer une grande profondeur de champ.

Dans l'exemple représenté, l'optique ou objectif est optimisé pour une profondeur de champ allant de 1 m à l'infini.

On améliore ainsi la qualité des images en lumière visible par rapport à celle que l'on obtient avec le dispositif connu de la figure 1.

Cette amélioration de la qualité des images en lumière visible est quantifiable à l'aide de mires-vidéo.

L'invention n'est pas limitée à une utilisation avec la chaîne optique qui est représentée sur la figure 1 et qui comprend l'écran 24 et la caméra 26.

A titre d'exemple, dans un autre mode de réalisation de l'invention, on utilise la partie de blindage mobile et l'optique dans un dispositif à deux films sensibles, du genre de celui qui est décrit dans le document (1).

Dans ce cas, comme le montre très schématiquement la figure 1, on supprime l'écran 24 et la caméra 26 ainsi que le boîtier 22 et les moyens 28 et 30 et l'on dispose à la place de l'écran 24, dans une cassette appropriée 68, les deux films 70 et 72.

Le film 70 n'est sensible qu'à la lumière visible et l'autre film 72 n'est sensible qu'au rayonnement gamma.

## Revendications

1. Dispositif de localisation de sources (2) de rayonnement, susceptibles de se trouver dans une zone, ce dispositif comprenant une chambre (4) à sténopé, dont la paroi forme un blindage (6) qui absorbe ledit rayonnement, et des moyens d'obturation (16, 33) de la chambre (4) à sténopé, ces moyens d'obturation (16, 33) étant transparents au rayonnement des sources (2), ce dispositif comprenant en outre dans la chambre (4) à sténopé, en regard de ce sténopé (32), des moyens de formation d'images (24-26, 70-72) permettant d'obtenir d'une part une image des sources grâce au rayonnement de celles-ci et d'autre part une image de la zone grâce à la lumière visible de cette zone lorsque les moyens d'obturation (16, 33) sont ouverts, ce dispositif étant **caractérisé en ce qu'**une partie (36) du blindage (6), où se trouve le sténopé (32), est mobile et rendue rigidement solidaire d'une optique (34) permettant d'obtenir des images nettes en lumière visible sur la profondeur de champ souhaitée, cette optique étant apte à se substituer au sténopé (32), pour la formation de l'image de la zone, et réciproquement pour la formation de l'image des sources (2).

2. Dispositif selon la revendication 1, dans lequel la partie mobile (36) du blindage (6) et l'optique (34) sont mobiles en rotation autour d'un axe (40) parallèle à l'axe (18) de la chambre (4).

3. Dispositif selon la revendication 2, dans lequel la partie mobile (36) du blindage (6) a une forme apte à reconstituer exactement la paroi de la chambre (4) à sténopé lorsque ce sténopé (32) est dans la position permettant la formation de l'image des sources.

4. Dispositif selon l'une quelconque des revendications 2 et 3, comprenant en outre un ensemble moto-réducteur (48) fixé à la paroi de la chambre (4), à l'extérieur de celle-ci, et prévu pour faire tourner l'ensemble formé par la partie mobile (36) du blindage (6) et l'optique (34) autour de l'axe (40) parallèle à l'axe (18) de la chambre (4).

5. Dispositif selon l'une quelconque des revendications 1 à 4, dans lequel l'optique (34) comprend :
- deux lentilles (58, 60) déterminées de manière à assurer la mise au point sur les moyens de formation d'images, et
- un diaphragme (62) qui est disposé entre les deux lentilles (58, 60) et dont l'ouverture (66) est déterminée de manière à obtenir la profondeur de champ souhaitée.

6. Dispositif selon l'une quelconque des revendications 1 à 5, dans lequel les moyens d'obturation (16, 33) comprennent un obturateur mobile (16) transparent au rayonnement des sources (2) et placé entre les moyens de formation d'images (24-26, 70-72) et la partie mobile (36) du blindage.

7. Dispositif selon l'une quelconque des revendications 1 à 5, dans lequel les moyens d'obturation (16, 33) comprennent un élément (33) qui est opaque à la lumière visible et transparent au rayonnement des sources (2) et qui obture en permanence le sténopé (32).

8. Dispositif selon l'une quelconque des revendications 1 à 7, dans lequel les moyens de formation d'images comprennent un écran luminescent (24), transparent dans le domaine visible et apte à convertir le rayonnement des sources en un rayonnement lumineux visible, les moyens d'obturation étant en outre aptes à empêcher la lumière visible de la zone d'atteindre l'écran, le dispositif comprenant aussi une caméra (26) qui est optiquement couplée à l'écran (24) et qui est apte à fournir sous forme de signaux électriques, une image des sources (2) grâce au rayonnement lumineux qu'elle reçoit de l'écran (24) ,et une image de la zone, grâce à la lumière visible qu'elle reçoit de cette zone à travers l' écran (24) lorsque les moyens d'obturation (16, 33) sont ouverts.

9. Dispositif selon l'une quelconque des revendications 1 à 7, dans lequel les moyens de formation d'images comprennent un dispositif à deux films (70, 72), l'un de ces deux films étant sensible au rayonnement des sources (2) et l'autre à la lumière visible de la zone.

## Patentansprüche

1. Vorrichtung zu Lokalisierung in einer Zone befindlicher Strahlungsquellen (2), wobei diese Vorrichtung eine Lochblendenkammer (4), deren Wand eine Abschirmung (6) bildet, welche die genannte Strahlung absorbiert, und Verschlusseinrichtungen (16, 33) dieser Lochblendenkammer (4) umfasst, wobei diese Verschlusseinrichtungen (16, 33) durchlässig sind für die Strahlung der Quellen (2), und diese Vorrichtung außerdem in der Lochblendenkammer (4), dieser Lochblende (32) gegenüberstehend, Bilderzeugungseinrichtungen (24-26, 70-72) umfasst, die ermöglichen, wenn die Verschlusseinrichtungen (16, 33) geöffnet sind, einerseits dank der Strahlung der Quellen ein Bild von diesen herzustellen und andererseits dank des sichtbaren Lichts ein Bild von der genannten Zone,
dabei ist diese Vorrichtung **dadurch gekennzeichnet, dass** ein die Lochblende (32) umfassender Teil (36) der Abschirmung (6) beweglich ist und starr mit einer Optik (34) verbunden ist, die ermöglicht, mit dem sichtbaren Licht scharfe Bilder in dem gewünschten Schärfenbereich zu erlangen, wobei die Optik (34) den Platz der Lochblende (32) einnehmen kann, um das Bild der Zone herzustellen, und umgekehrt, um das Bild der Quellen (2) herzustellen.

2. Vorrichtung nach Anspruch 1, bei welcher der bewegliche Teil (36) der Abschirmung (6) und die Optik (34) um eine Achse (40) gedreht werden können, die parallel ist zu der Achse (18) der Kammer (4).

3. Vorrichtung nach Anspruch 2, bei welcher der bewegliche Teil (36) der Abschirmung (6) eine Form hat, die genau an die Form der Wand der Lochblendenkammer (4) angepasst ist, wenn die Lochblende 32 sich in der Stellung befindet, welche die Herstellung des Bildes von den Quellen ermöglicht.

4. Vorrichtung nach einem der Ansprüche 2 und 3, die außerdem eine Getriebemotoreinheit (48) umfasst, befestigt an der Wand der Kammer (4), außerhalb von dieser, die dazu dient, die durch den beweglichen Teil (36) der Abschirmung (6) und die Optik (34) gebildete Einheit um die zu der Achse (18) der Kammer (4) parallele Achse (40) zu drehen.

5. Vorrichtung nach einem der Ansprüche 1 bis 4, bei der die Optik umfasst:
- zwei Linsen (58, 60), bestimmt zur Fokussierung auf die Bilderzeugungseinrichtungen, und
- eine Lochblende (62), die zwischen den beiden Linsen angeordnet ist und deren Öffnung (66) so festgelegt ist, dass man den erwünschten Schärfenbereich erhält.

6. Vorrichtung nach einem der Ansprüche 1 bis 5, bei der die Verschlusseinrichtungen (16, 33) einen beweglichen Verschluss umfassen, der durchlässig ist für die Strahlung der Quellen (2) und der sich zwischen den Bilderzeugungseinrichtungen (24-26, 70-72) und dem beweglichen Teil (36) der Abschirmung befindet.

7. Vorrichtung nach einem der Ansprüche 1 bis 5, bei der die Verschlusseinrichtungen (16, 33) ein Element (33) umfassen, das undurchlässig ist für das sichtbare Licht und durchlässig für die Strahlung der Quellen (2) und das die Lochblende (32) permanent verschließt.

8. Vorrichtung nach einem der Ansprüche 1 bis 7, bei der die Bilderzeugungseinrichtungen einen Leuchtschirm (24) umfassen, der im sichtbaren Bereich durchlässig ist und fähig, die Strahlung der Quellen umzuwandeln in eine Strahlung aus sichtbarem Licht, wobei die Verschlusseinrichtungen außerdem fähig sind, das sichtbare Licht der Zone daran zu hindern, den Schirm zu erreichen, und diese Vorrichtung dabei auch eine Kamera (26) umfasst, die optisch mit dem Schirm (24) gekoppelt und fähig ist, dank der Lichtstrahlung, die sie von dem Schirm (24) erhält, in Form von elektrischen Signalen ein Bild der Quellen (2) zu liefern, und dank des sichtbaren Lichts, das sie von der Zone durch den Schirm (24) hindurch erhält, ein Bild von dieser Zone zu liefern, wenn die Verschlusseinrichtungen (16, 33) geöffnet sind.

9. Vorrichtung nach einem der Ansprüche 1 bis 7, bei der die Bilderzeugungseinrichtungen eine Vorrichtung mit zwei Filmen (70, 72) umfassen, wobei einer dieser beiden Filme für die Strahlung der Quellen (2) empfindlich ist und der andere für das sichtbare Licht der Zone.

## Claims

1. Device for localizing radiation sources (2) that may be located in a zone, this device comprising a pinhole chamber (4), the wall of which acts as shielding (6) that absorbs the said radiation, and means (16, 33) of closing the pinhole chamber (4), these closing means (16, 33) being transparent to the radiation of sources (2), this device also comprising means (24-26, 70-72) of forming images in the pinhole chamber (4) facing this pinhole (32), in order to obtain firstly an image of the sources due to their radiation and secondly an image of the area due to visible light from this area when the closing means (16, 33) are open, this device being **characterized in that** some (36) of the shielding (6) in which the pinhole (32) is located is free to move and is fixed to an optical system (34) that produces sharp images in visible light on the required field depth, this optical system being capable of substituting itself for the pinhole (32) to create an image of the area, and vice versa to form an image of the sources (2).

2. Device according to claim 1, wherein the mobile part (36) of the shielding (6) and the optical system (34) are free to rotate about an axis (40) parallel to the axis (18) of the chamber (4).

3. Device according to claim 2, wherein the shape of the moving part (36) of the shielding can be exactly the same as the shape of the wall of the pinhole chamber (4) when this pinhole (32) is in a position such that the image of the sources can be formed.

4. Device according to any one of claims 2 and 3, also comprising a motor reduction gear assembly (48) fixed to the wall of the chamber (4) and outside the chamber, and designed to rotate the assembly consisting of the moving part (36) of the shielding (6) and the optical system (34) about the centre line (40) parallel to the centre line (18) of the chamber (4).

5. Device according to any one of claims 1 to 4, wherein the optical system (34) comprises:
- two lenses (58, 60) selected so as to focus on image formation means, and
- a diaphragm (62) placed between the two lenses (58, 60), the aperture (66) of which is determined to obtain the required field depth.

6. Device according to any one f claims 1 to 5, wherein the closing means (16, 33) comprise a mobile shutter (16) transparent to radiation from the sources and placed between the image formation means (24-26, 70-72) and the mobile part (36) of the shielding.

7. Device according to any one of claims 1 to 5, wherein the closing means (16, 33) comprise an element (33) that is opaque to visible light and is transparent to radiation from the sources (2) and which permanently blocks the pinhole (32).

8. Device according to any one of claims 1 to 7, wherein the image formation means comprise a luminescent screen (24), transparent in the visible range and capable of converting radiation from the sources into visible light radiation, the shutter means also being capable of preventing visible light from the area from reaching the screen, the device also comprising a camera (26) that is optically coupled to the screen (24) and which is capable of supplying an image of the sources (2) in the form of electric signals by means of light radiation that it receives from the screen (24), and an image of the area by means of visible light that it receives from this area through the screen (24) when the closing means (16, 33) are open.

9. Device according to any one of claims 1 to 7, wherein the means of forming images comprise a device with two films (70, 72), one of these two films being sensitive to radiation from the sources (2) and the other to visible light in the area.
